# EUROPEAN PATENT APPLICATION

(11) **EP 4 721 944 A1**
(43) Date of publication of application: **08.04.2026**
(21) Application number: 24814973.4
(22) Date of filing: 04.04.2024
(51) Int. Cl.: B29B 17/02, B65H 41/00

(54) **COATING PEELING DEVICE AND COATING PEELING METHOD**

(30) Priority: 31.05.2023 JP 2023089859; 31.05.2023 JP 2023090015
(71) Applicant: Toray Industries, Inc., Tokyo 103-8666 (JP)
(72) Inventor: TANINO, Kiyoshi, Otsu-shi, Shiga 520-8558 (JP); HIGASHIDA, Yoshihisa, Otsu-shi, Shiga 520-8558 (JP); WATANABE, Kazutaka, Otsu-shi, Shiga 520-8558 (JP)
(74) Representative: Hoefer & Partner Patentanwälte mbB
(86) International application number: PCT/JP2024/013876
(87) International publication number: WO 2024/247486

(57) **Abstract**

Provided are a coating film removing device and a coating film removing method capable of efficiently removing a coating film without applying high tension to a coated film. The conveyance coating film removing device of the present invention removes a coating film from a coated film including the coating film on at least one surface of a base film, the coating film removing device including: a conveyance mechanism that conveys the coated film; and a coating film removing member having an edge extending in a film width direction, the edge that being configured to be in contact with a coating film surface of the coated film to remove the coating film, in which, as viewed from a side in a conveyance direction of the coated film, an angle formed by a surface on an upstream side in the film conveyance direction among surfaces forming the edge of the coating film removing member and the coated film conveyed toward the edge is greater than or equal to 90° and less than 180°.

## Description

### Field

The present invention relates to a removing device and a removing method capable of efficiently removing a coating film on a surface of a base film. Background

While plastics are used in various fields, plastics are considered to be a cause of marine pollution such as microplastics, and reduction of environmental load by plastics is urgently needed.

In recent years, the evolution of the Internet of things (IoT), the number of electronic devices such as CPUs mounted on computers or smartphones has increased, and accordingly, the number of multilayer ceramic capacitors (MLCC) required to drive the electronic devices has also rapidly increased. A general manufacturing method of the MLCC includes: a step of forming a ceramic green sheet layer on a release film by using the release film obtained by forming a release layer on a plastic base film as a carrier sheet; and a step of removing the ceramic green sheet layer to obtain a ceramic green sheet. In this step, the release film from which the ceramic sheet has been removed is discarded as an unnecessary material.

That is, an increase of release films as a waste accompanying a rapid increase in the number of manufactured MLCCs in recent years has become an environmental problem, and efforts for reuse of the base films are becoming more active. Since the components of a release layer contained in a release film generally have a composition different from the components contained in a base film from the viewpoint of releasability, in a case where a recycled film is formed by remelting the release film attached with the release layer as they are, the components of the release layer are present as foreign matters, and therefore stable film formation cannot be performed.

Patent Literature 1 discloses, as a method of removing a release layer containing water-soluble resin from a release film, a method in which a cleaning liquid in the form of droplets is applied to the release layer, the cleaning liquid is held in the form of droplets on the surface of the release layer, and then the release layer containing the cleaning liquid is removed.

Patent Literature 2 discloses, as a coating film removing device for a belt-shaped film provided with coating film, a coating film removing device including a plurality of rotary removing equipments in which an axis orthogonal to a conveyance direction of the belt-shaped film is set as the rotation axis, and blades for removing the coating film are circumferentially included on the outer peripheral portion at predetermined angular intervals.

### Citation List

### Patent Literature

Patent Literature 1: WO 2022/190713 A
Patent Literature 2: JP 2017-56675 A

### Summary

### Technical Problem

### [First Problem]

In the method described in Patent Literature 1, it is necessary to apply high tension to the release film when the release layer is removed from the release film by a removing equipment.

An object of the present invention is to provide a coating film removing device and a coating film removing method capable of efficiently removing a coating film without applying high tension to a coated film.

### [Second Problem]

In the coating film removing device of Patent Literature 2, since removed coating film is not immediately collected, there is a possibility that the removed coating film is deposited during continuous operation, which may result in poor removing.

Therefore, the object of the present invention is to provide a coating film removing device and a coating film removing method capable of discharging removed coating film from a coating film removing member and maintaining high coating film removal performance even during continuous operation.

### Solution to Problem

### [First Coating film Removing Device and First Coating film Removing Method]

[1] A first coating film removing device of the present invention that solves the above problems is a coating film removing device that removes a coating film from a coated film including the coating film on at least one surface of a base film. The coating film removing device includes: a conveyance mechanism configured to convey the coated film; and a coating film removing member having an edge extending in a film width direction, the edge being configured to be in contact with a surface of the coating film of the coated film to remove the coating film. As viewed from a side in a conveyance direction of the coated film, an angle formed by a surface on an upstream side in the film conveyance direction among surfaces forming the edge of the coating film removing member and the coated film conveyed toward the edge is greater than or equal to 90° and less than 180°.
   The first coating film removing device of the present invention is preferably one of the following [2] to [5].
[2] The coating film removing device according to [1], in which a plurality of coating film removing members are arranged in the film conveyance direction.
[3] The coating film removing device according to [1] or [2], in which the coating film removing member includes a cylindrical main body and a plurality of edges arranged on a circumference of the main body in parallel to a central axis of the main body.
[4] The coating film removing device according to [1] or [2], in which the coating film removing member includes a cylindrical main body and a plurality of edges arranged spirally on a circumference of the main body.
[5] The coating film removing device according to any one of [1] to [4], further comprising a cleaning liquid applying mechanism provided on the upstream side in the film conveyance direction with respect to the coating film removing member, the cleaning liquid applying mechanism being configured to discharge a cleaning liquid toward the surface of the coating film of the coated film.
[6] A first coating film removing method of the present invention that solves the above problems is a coating film removing method for removing a coating film from a coated film including the coating film on at least one surface of a base film using any one of the above coating film removing devices. The method includes: removing the coating film from the coated film by bringing the edge of the coating film removing member into contact with the surface of the coating film while conveying the coated film by the conveyance mechanism.
   The first coating film removing method of the present invention is preferably any one of the following [7] to [9].
[7] The coating film removing method according to [6], in which the cleaning liquid is applied to the surface of the coating film, and then the coating film containing the cleaning liquid is removed by the coating film removing member.
[8] The coating film removing method according to [7], in which the coating film contains a water-soluble resin.
[9] The coating film removing method according to [8], in which the coating film contains a curable silicone.

### [Second Coating film Removing Device and Second Coating film Removing Method]

[1] A second coating film removing device of the present invention that solves the above problems is a coating film removing device that removes a coating film from a coated film including the coating film on at least one surface of a base film. The coating film removing device includes: a conveyance mechanism configured to convey the coated film; and a rotary removing member including: a main body having a rotation axis extending in a width direction of the coated film; a plurality of edges configured to remove the coating film, the plurality of the edges being arranged to extend in the width direction on a circumference of the main body; and a discharge portion that is a space between the plurality of edges. The coating film is removed from the coated film conveyed by the conveyance mechanism by rotation of the rotary removing member, and the coating film removed is removed from an end of the discharge portion in the width direction.
   The second coating film removing device of the present invention is preferably any one of the following [2] to [7].
[2] The coating film removing device according to [1], in which the edges and the discharge portion are arranged on the circumference of the main body in parallel to the rotation axis.
[3] The coating film removing device according to [1], in which the edges and the discharge portion are spirally arranged on the circumference of the main body around the rotation axis.
[4] The coating film removing device according to any one of [1] to [3], in which a suction mechanism is connected to the discharge portion.
[5] The coating film removing device according to any one of [1] to [4], in which an air jetting mechanism is connected to the discharge portion.
[6] The coating film removing device according to any one of [1] to [5], further including a cleaning liquid applying mechanism configured to discharge a cleaning liquid toward a surface of the coating film of the coated film.
[7] The coating film removing device according to any one of [1] to [6], in which an angle formed by a surface on an upstream side in a conveyance direction of the film among surfaces forming an edge of the coating film removing member and the coated film conveyed toward the edge is greater than or equal to 90° and less than 180° as viewed from a side in the conveyance direction of the coated film.
[8] In addition, a second coating film removing method of the present invention for solving the above problems is a method for removing s coating film from a coated film including the coating film on at least one surface of a base film using any one of the above coating film removing devices. The method includes: conveying the coated film by the conveyance mechanism; bringing the rotary removing member into contact with a surface of the coating film while rotating the rotary removing member; removing the coating film from the coated film; and removing the coating film removed from an end of the discharge portion in a width direction.
   The second coating film removing method of the present invention is preferably any one of the following [9] to [11].
[9] The coating film removing method according to [8], in which a cleaning liquid is applied to the surface of the coating film, and then the coating film containing the cleaning liquid is removed by the rotary removing member.
[10] The coating film removing method according to [9], in which the coating film contains a water-soluble resin.
[11] The coating film removing method according to [10], in which the coating film contains a curable silicone.

### Advantageous Effects of Invention

### [First Effect]

According to the first coating film removing device and the first coating film removing method of the present invention, coating film can be efficiently removed from a coated film including the coating film on at least one surface of a base film without applying high tension.

### [Second Effect]

According to the second coating film removing device and the second coating film removing method of the present invention, it is possible to maintain high removal performance of coating film from a coated film including the coating film on at least one surface of a base film.

### Brief Description of Drawings

FIG. 1 is a schematic diagram of a coating film removing device according to a first embodiment of the present invention.
FIG. 2 is a perspective view for explaining an angle formed by a coating film removing member and a coated film used in FIG. 1.
FIG. 3 is a diagram for explaining an angle formed by a coating film removing member and a coated film disclosed in the related art.
FIG. 4 is a diagram for explaining an angle formed by a coating film removing member and a coated film according to a first modification of the first embodiment of the present invention.
FIG. 5 is a schematic diagram of a coating film removing device according to a second modification of the first embodiment of the present invention.
FIG. 6 is a side view (A) and a front view (B), as viewed from the downstream side in the film conveyance direction, of a coating film removing member according to a third modification of the first embodiment of the present invention.
FIG. 7 is a schematic diagram of a coating film removing device using the coating film removing member of FIG. 6.
FIG. 8 is a perspective view of a coating film removing member according to a fourth modification of the first embodiment of the present invention.
FIG. 9 is a schematic diagram of a coating film removing device according to a fifth modification of the first embodiment of the present invention.
FIG. 10 is a schematic diagram of a coating film removing device according to a second embodiment of the present invention.
FIG. 11 includes (A) a front view and (B) a side view of a rotary removing member used in FIG. 10.
FIG. 12 is a schematic diagram of a coating film removing device according to a first modification of the second embodiment of the present invention.
FIG. 13 is a perspective view of a rotary removing member used in FIG. 12.
FIG. 14 is a diagram for explaining coating film removing and discharging of the rotary removing member illustrated in FIG. 13.
FIG. 15 is a schematic diagram of a coating film removing device according to a second modification of the second embodiment of the present invention.
FIG. 16 includes (A) a front view of a rotary removing member according to a third modification of the second embodiment of the present invention, (B) an arrow view X in (A) of FIG. 16, and (C) an arrow view Y in (A) of FIG. 16.
FIG. 17 is a perspective view of a rotary removing member according to a third modification of the second embodiment of the present invention.
FIG. 18 is a schematic diagram of a coating film removing device according to a fourth modification of the second embodiment of the present invention.

### Description of Embodiments

Hereinafter, embodiments of the present invention will be described with reference to the drawings. Note that the following description exemplifies the embodiments according to the present invention, and it is not limited thereto, and various modifications can be made without departing from the gist of the present invention.

### (First Embodiment)

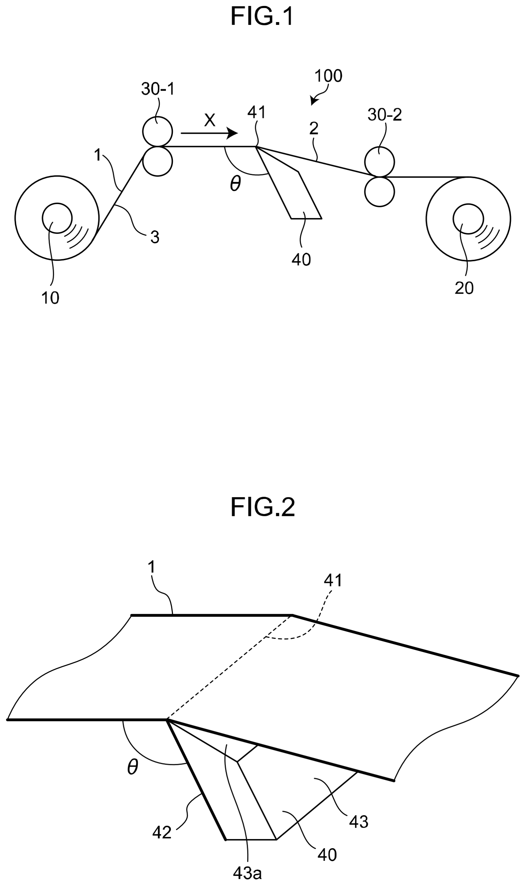

FIG. 1 is a schematic diagram of a coating film removing device 100 according to a first embodiment of the present invention. The coating film removing device 100 includes an unwinding device 10 that unwinds a film 1 including a coating film 3 on one surface of a base film 2 (hereinafter, referred to as a coated film in some cases), a winding device 20 that winds the base film 2 after removing the coating film 3 on a surface of the coated film 1, and driving devices 30-1 and 30-2 that convey the film in a direction of an arrow X in a state where tension is applied to the film. The coating film removing device 100 further includes a coating film removing member 40 that removes the coating film 3 from the coated film 1 between the driving devices 30-1 and 30-2. Hereinafter, the coating film removing device according to the first embodiment will be described.

### [Coated Film]

In the coating film removing device 100 according to the first embodiment of the present invention, the coated film 1, as a target, has the coating film 3 on at least one surface of the base film 2. Examples of the coating film 3 can include a coating film made of an organic substance and a coating film made of an inorganic substance. Examples of the coating film made of an inorganic substance include a metal coating film provided by vapor deposition and a ceramic green sheet containing barium titanate as a main component. Examples of the coating film made of an organic substance include a coating film made of an adhesive agent such as acrylic or a fluorine-based or silicone-based release agent provided by coating. The coating film preferably contains a water-soluble resin in consideration of environmental load and the like. Among the water-soluble resins, those containing at least one of a water-soluble polyester-based resin, a polyester urethane-based resin, an acrylic resin, an ethylene ionomer-based resin, a polyvinyl alcohol-based resin, a polyvinyl pyrrolidonebased resin, an ethylene-vinyl alcohol-based resin, or starch as a main component are more preferable. A cleaning liquid may be applied to the coating film before the coating film 3 is removed by the coating film removing member 40 in a coating film removing device 100E described later so that the coating film 3 is easily removed.

The coating film containing a water-soluble resin may be a single layer body containing the water-soluble resin, a stacked body of two or more layers containing the water-soluble resin, or a stacked body of a layer containing the water-soluble resin and a layer not containing the water-soluble resin.

As the coating film 3, a coated release film containing, partially in the coating film, a release component, in addition to the water-soluble resin, is particularly preferable, and the effect of coating film removing can be efficiently exhibited. The release component mentioned here refers to a component that increases the contact angle of the surface of the coating film with respect to the cleaning liquid, namely, a component that reduces the surface energy of the coating film, of which examples include a curable silicone resin compound having dimethylsiloxane as the main skeleton, a compound having a long chain alkyl group, and a compound having fluorine. The coating film may be a layer containing the water-soluble resin and the release component, or a layer containing the water-soluble resin and a layer containing the release component may be stacked. In the case of coating film of stacked layers, it is preferable that a layer containing the water-soluble resin is formed on the base film and that, next, a layer containing a release component is formed on the outermost surface. As the release component, it is particularly preferable to use a curable silicone resin compound having dimethylsiloxane having high water permeability as the main skeleton, which can be suitably used as a cleaning liquid.

### [Coating film Removing Member and Coating film Removing Device]

FIG. 2 is a perspective view for explaining an angle formed by a coating film removing member 40 and a coated film 1 used in FIG. 1. The coating film removing member 40 has an edge 41 which extends in a ridge line shape in the film width direction and comes into contact with the surface of the coating film 3 of the coated film 1 to remove the coating film 3. The edge 41 includes a surface 42 on the upstream side in the film conveyance direction, a surface 43 on the downstream side in the film conveyance direction, and side surfaces between the surface 42 on the upstream side and the surface 43 on the downstream side. The surface 43 on the downstream side in the film conveyance direction is provided with a gradient 43a in order to make the edge 41 have an acute angle. The coating film removing member 40 is preferably made of metal, but is not limited thereto, and may be made of resin. The coating film removing member 40 is disposed to face the surface of the coating film of the coated film 1. Installation is not limited to the lower surface side as illustrated in FIG. 1. The unwinding device 10 is more preferably a mechanism capable of switching the unwinding direction of the coated film 1 and conveying with the surface of the coating film of the coated film 1 facing the edge 41 in such a manner that the coating film 3 can be removed regardless of whether the coating film 3 of the coated film 1 wound in a roll is on the inner side or on the outer side of the roll.

The driving devices 30-1 and 30-2 preferably have a structure that enables tension adjustment in order to stably convey the coated film 1 and the base film 2 from which the coating film 3 has been removed. In a case where the tension is adjusted by a suction roll, a part of the coating film of the coated film 1 may be sucked, which may cause a trouble. Therefore, a structure in which the film is nipped by a metallic driving roll and a rubber roll is more suitably used. As the driving devices 30-1 and 30-2, those made of stainless steel or applied with surface treatment as a rust prevention measure are suitably used.

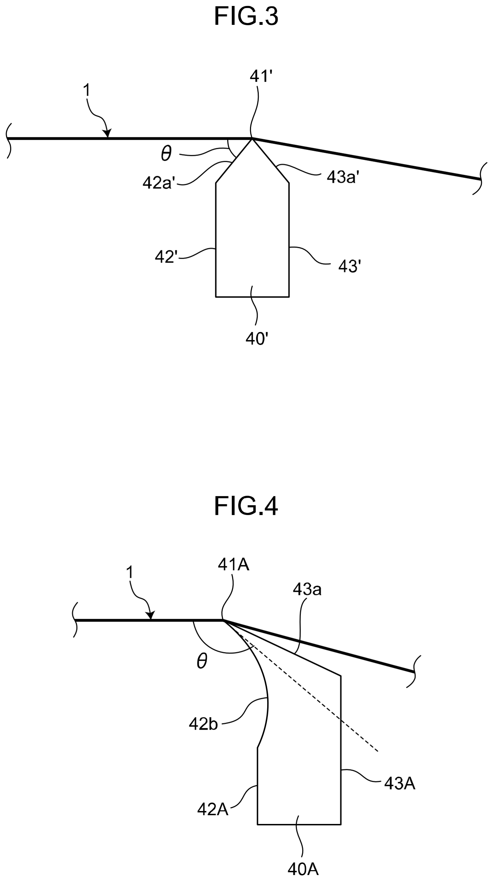

FIG. 3 is a diagram for explaining an angle formed by a coating film removing member 40' and a coated film 1 disclosed in the related art. In the related technology as illustrated in FIG. 3, as viewed from a side in the conveyance direction of the coated film 1, an angle θ formed by a gradient 42a' formed on a surface 42' on the upstream side in the film conveyance direction among surfaces forming an edge 41' and the coated film 1 conveyed toward the edge 41' is less than 90°. On the other hand, in the coating film removing member 40 of the first embodiment, as viewed from a side in the conveyance direction of the coated film, the coating film removing member 40 and the coated film 1 are arranged in such a manner that an angle θ formed by the surface 42 on the upstream side in the film conveyance direction among the surfaces forming the edge 41 and the coated film 1 conveyed toward the edge 41 is greater than or equal to 90° and less than 180°. By setting the angle formed by the surface 42 and the coated film 1 to greater than or equal to 90° and less than 180°, the coating film 3 can be efficiently removed from the coated film 1 without applying high tension to the coated film 1 by the driving devices 30-1 and 30-2. The angle θ formed by the surface 42 and the coated film 1 conveyed toward the edge 41 is more preferably within a range of 90° to 150°.

Note that, in order to check the quality of the base film 2 from which the coating film 3 has been removed by the coating film removing member 40, the coating film removing device 100 may include an inspection machine (not illustrated), for detecting residues of the coating film 3 or environmental foreign matters attached in a step, as a preceding stage to the winding device 20. The inspection machine may be selected depending on the properties of the base film 2, and an inspection machine using transmitted light or reflected light is suitably used. A marking device (not illustrated) for recording the position of the residues of the coating film detected by the inspection machine or the environmental foreign matter attached in the steps may also be provided between the inspection machine and the winding device 20. The marking method by the marking device may be any method as long as the position of a detection target can be marked, such as a pen, a sticker, or laser. By marking the residues of the coating film or the environmental foreign substances attached in the steps, it is possible to remove those portions before remelting, and thus a regenerated film can be more stably formed, and deterioration in the quality of the regenerated film can be prevented.

FIG. 4 is a diagram for explaining an angle formed by a coating film removing member 40A and the coated film 1 according to a first modification of the first embodiment of the present invention. In an edge 41A of the coating film removing member 40A, an arc-shaped concave surface 42b is included on A surface 42A on the upstream side in the film conveyance direction, and the edge 41A is formed by the concave surface 42b, a gradient 43a, and side surfaces between the concave surface 42b and the gradient 43a. Also in the coating film removing member 40A, as viewed from the side in the conveyance direction of the coated film, the coating film removing member 40A is disposed in such a manner that an angle θ formed by the concave surface 42b on the upstream side in the film conveyance direction and the coated film 1 conveyed toward the edge 41A is greater than or equal to 90° and less than 180°, whereby the coating film 3 can be efficiently removed from the coated film 1 without applying high tension. The angle θ formed by the concave surface 42b and the coated film 1 conveyed toward the edge 41A is more preferably within the range of 90° to 150°.

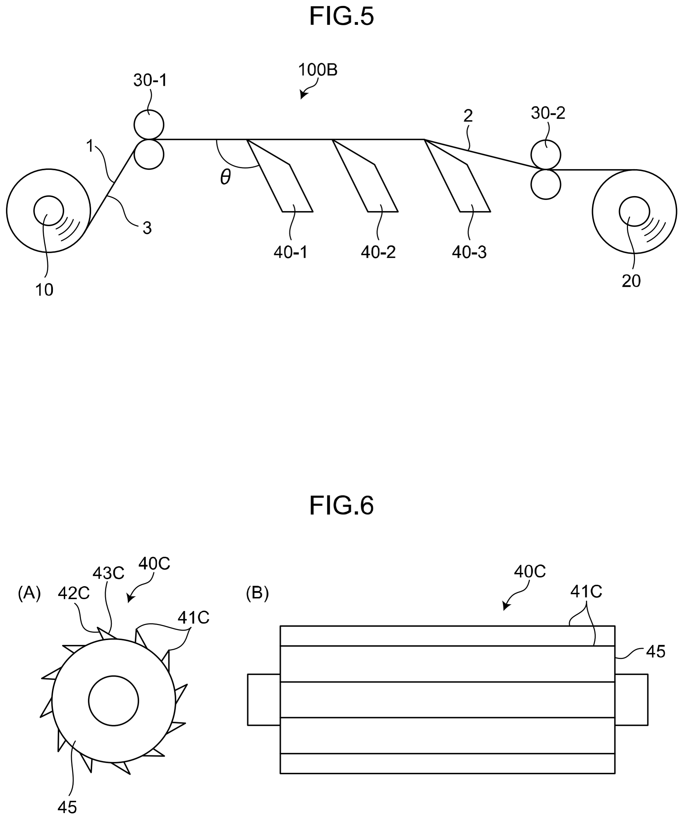

FIG. 5 is a schematic diagram of a coating film removing device 100B according to a second modification of the first embodiment of the present invention. The coating film removing device 100B includes a plurality of coating film removing members 40-1, 40-2, and 40-3. The coating film removing members 40-1, 40-2, and 40-3 have a similar structure to that of the coating film removing member 40 according to the first embodiment.

The coating film removing members 40-1, 40-2, and 40-3 are arranged side by side in the film conveyance direction between the driving devices 30-1 and 30-2. Similarly to the coating film removing member 40 according to the first embodiment, the coating film removing members 40-1, 40-2, and 40-3 are arranged in such a manner that an angle θ formed by a surface 42 on the upstream side in the film conveyance direction among surfaces forming an edge 41 and the coated film 1 conveyed toward the edge 41 is greater than or equal to 90° and less than 180°. By including the plurality of coating film removing members 40-1, 40-2, and 40-3, the removing efficiency of the coating film 3 can be further improved. In the present modification, the three coating film removing members 40-1, 40-2, and 40-3 are arranged; however, the number of arranged coating film removing members is not limited thereto. In addition, the angles θ formed by the respective coating film removing members and the coated film 1 may be the same angle or different angles. The angle θ formed by the surface 42 of each of the coating film removing members and the coated film 1 conveyed toward the edge 41 is more preferably within a range of 90° to 150°.

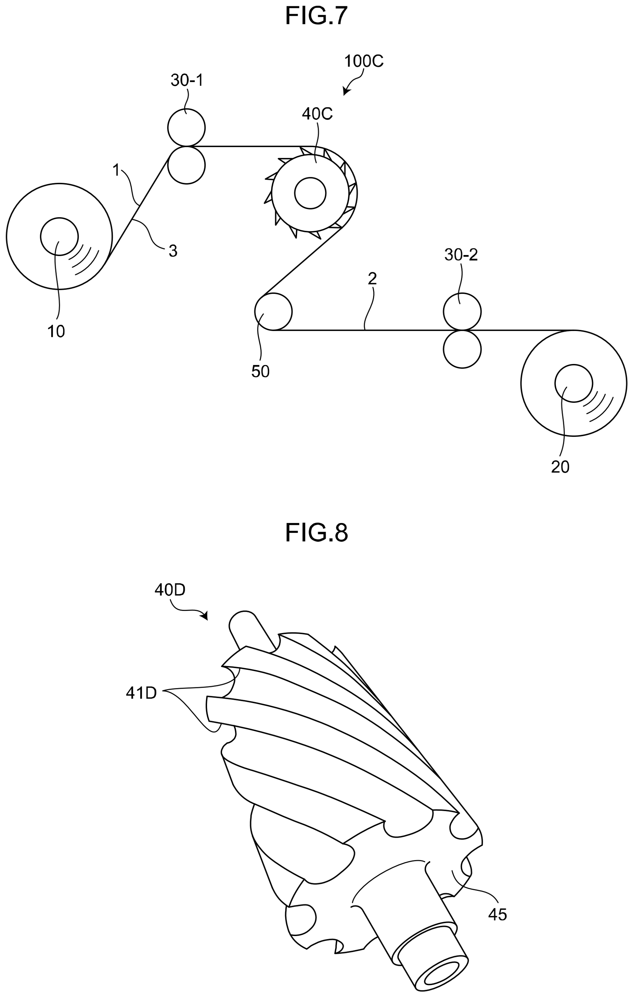

FIG. 6 is (A) a side view and (B) a front view, as viewed from the downstream side in the film conveyance direction, of a coating film removing member 40C according to a third modification of the first embodiment of the present invention. FIG. 7 is a schematic diagram of a coating film removing device 100C using the coating film removing member 40C of FIG. 6.

The coating film removing member 40C includes a cylindrical main body 45 and a plurality of edges 41C arranged on the circumference of the main body 45 in parallel to the central axis of the main body 45. The edge 41C includes a surface 42C on the upstream side in the film conveyance direction, a surface 43C on the downstream side in the film conveyance direction, and side surfaces between the surface 42C on the upstream side and the surface 43C on the downstream side. The coating film removing member 40C can also be used by being rotationally driven with the central axis of the main body 45 as the rotation axis. In the case of rotating the coating film removing member 40C, it is preferable to perform reverse rotation in a direction opposite to the conveyance direction of the coated film 1. Also in the coating film removing device 100C, the edges 41C are formed on the circumference of the main body 45, and the conveyance direction of the coated film 1 is set in such a manner that the angle θ formed by a surface 42C on the upstream side in the film conveyance direction among surfaces forming an edge 41C and the coated film 1 is greater than or equal to 90° and less than 180°. The angle formed by the surface 42C and the coated film 1 is more preferably within the range of 90° to 150°.

In the coating film removing device 100C, a roller 50 is disposed on the downstream side of the coating film removing member 40C. By disposing the roller 50 on the downstream side of the coating film removing member 40C and in such a manner as to bring the plurality of edges 41C into contact with the coated film 1, the removing efficiency of the coating film 3 can be improved.

FIG. 8 is a perspective view of a coating film removing member 40D according to a fourth modification of the first embodiment of the present invention. The coating film removing member 40D includes a cylindrical main body 45 and a plurality of edges 41D spirally arranged on the circumference of the main body 45. The coating film removing member 40D can be used in place of the coating film removing member 40C in the coating film removing device 100C illustrated in FIG. 7. Similarly to the coating film removing member 40C, the coating film removing member 40D can also be used by being rotationally driven with the central axis of the main body 45 as the rotation axis. In the case of rotating the coating film removing member 40D, it is preferable to perform reverse rotation in a direction opposite to the conveyance direction of the coated film 1. Also in the coating film removing member 40D, the edges 41D are formed on the circumference of the main body 45, and the conveyance direction of the coated film 1 is set in such a manner that the angle θ formed by a surface on the upstream side in the film conveyance direction among surfaces forming an edge 41D and the coated film 1 is greater than or equal to 90° and less than 180°. The angle θ is more preferably within the range of 90° to 150°.

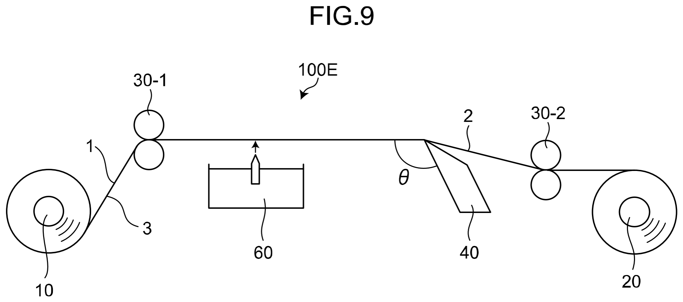

FIG. 9 is a schematic diagram of a coating film removing device 100E according to a fifth modification of the first embodiment of the present invention. The coating film removing device 100E includes a cleaning liquid applying mechanism 60 provided on the upstream side in the film conveyance direction with respect to the coating film removing member 40. The cleaning liquid applying mechanism 60 includes a discharge nozzle that discharges a cleaning liquid, a liquid feeding pump that feeds the cleaning liquid to the discharge nozzle, and a tank that stores the cleaning liquid. The coating film removing device 100E is suitably used to facilitate removing of the coating film 3.

The amount of the cleaning liquid to be applied to the surface of the coating film of the coated film 1 can be preferably greater than or equal to 1 cm³/m² so that at least some components of the coating film can be sufficiently dissolved, and it is preferable to adjust the liquid feeding pump depending on the conveyance speed of the coated film 1 to determine the specifications of a discharge head and the liquid feeding pump in such a manner that a necessary amount of the cleaning liquid can be applied to the surface of the coating film of the coated film 1. The discharge nozzle is only required to be able to apply the cleaning liquid to the surface of the coating film of the coated film 1, and examples thereof include a spray nozzle, a shower head nozzle, and a jet nozzle for high-pressure water.

The cleaning liquid applying mechanism 60 is only required to be able to apply the cleaning liquid to the surface of the coating film of the coated film 1 and may have a liquid tank storing the cleaning liquid and apply the cleaning liquid to the surface of the coating film by immersing the coated film 1 in the liquid tank.

As the cleaning liquid used in the coating film removing device 100E, any solvent that can dissolve at least some components of the coating film exhibits the effect; however, it is preferable to use water in order to reduce the environmental load. In addition, a surfactant or the like may be added to the cleaning liquid in order to improve wettability with the coated film and to facilitate the cleaning liquid to be delivered over the surface of the coating film.

In order to dissolve at least some components of the coating film quickly, it is preferable to apply a heated cleaning liquid to the surface of the coating film of the coated film 1. In a case where a discharge head is used, the discharge head may be provided with a heat source such as a cartridge heater, or a tank for storing the cleaning liquid may be heated. In a case where a liquid tank is used, the liquid tank may be heated, or a throw-in heater may be installed inside the liquid tank. Any means may be used as long as the cleaning liquid can be heated, and it is not limited to the above means.

In addition, the coated film 1 to which the cleaning liquid has been applied may be heated in the coating film removing device 100E. As the heating means, a hot air generator or the like (not illustrated) can be used. By setting the temperature of the coated film 1 to higher than or equal to 40°C by hot air, the cleaning liquid applied to the surface of the coating film quickly dissolves at least some components of the coating film, whereby the coating film can be more efficiently removed. The means for heating the coated film 1 may be any means. For example, the coated film 1 may be brought into direct contact with a heating roll, or the cleaning liquid applying mechanism 60 and the coating film removing mechanism 40 may be surrounded by a booth, and an infrared heater may be installed inside the booth for heating, yet it is not limited thereto. In addition, installing the booth makes it possible to prevent a decrease in the temperature of the heated cleaning liquid and/or the coated film 1, and it is possible to prevent scattering to the surroundings even in a case where the cleaning liquid is applied in the form of droplets. Since the inside of the booth has a high temperature, the booth preferably has heat resistance, and thus metal, glass, or the like is suitably used.

In the coating film removing device 100E, it is more preferable to completely remove the cleaning liquid in order to stably form a film as a regenerated film after remelting the base film 2 obtained after removing the coating film 3 and wound by the winding device 20, and a drying device (not illustrated) may be provided between the coating film removing member 40 and the winding device 20. The drying device only needs to be provided as a preceding stage to winding and may be either preceding or subsequent to the driving device 30-2.

As described above, the coating film removing device and the coating film removing method according to the first embodiment of the present invention can efficiently remove the coating film from the coated film including the coating film on at least one surface of the base film without applying high tension.

### (Second Embodiment)

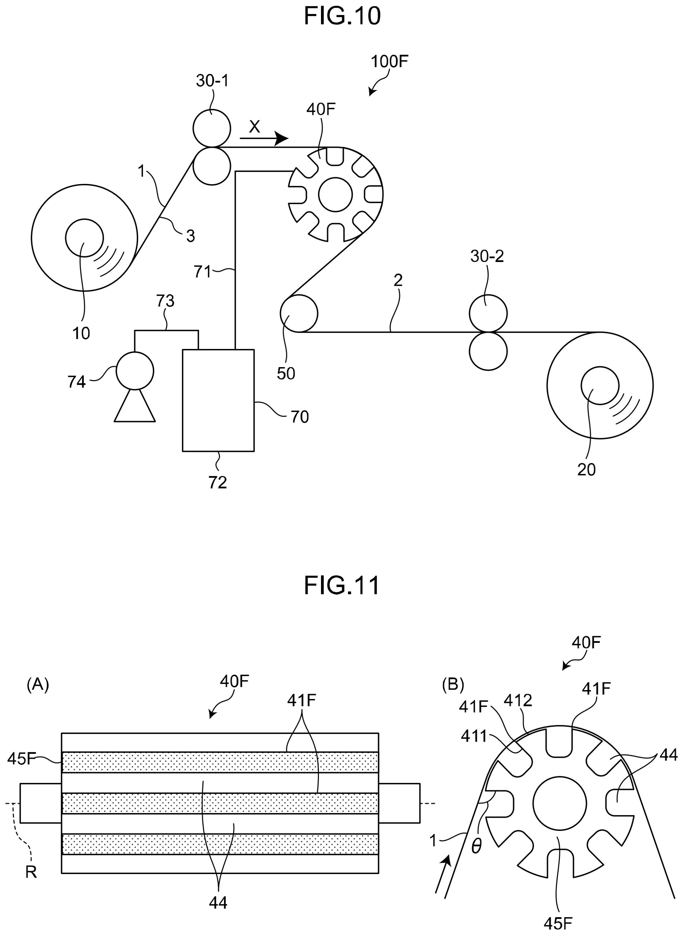

FIG. 10 is a schematic diagram of a coating film removing device 100 according to a second embodiment of the present invention. The coating film removing device 100F includes an unwinding device 10 that unwinds a film 1 including coating film 3 on one surface of a base film 2 (hereinafter, referred to as a coated film in some cases), a winding device 20 that winds the base film 2 after removing the coating film 3 on a surface of the coated film 1, and driving devices 30-1 and 30-2 that convey the film in a direction of an arrow X in a state where tension is applied to the film. In the coating film removing device 100F, a rotary removing member 40F that removes the coating film 3 from the coated film 1, a roller 50 disposed on the downstream side of the rotary removing member 40F, and a suction mechanism 70 that sucks the coating film 3, which is a removed matter removed by the coating film removing member 40F, are arranged between the driving devices 30-1 and 30-2. Hereinafter, the coating film removing device according to the second embodiment will be described.

### [Coated Film]

In the coating film removing device 100F according to the second embodiment of the present invention, the target coated film 1 has the coating film 3 on at least one surface of the base film 2, which is the same as the target coated film 1 of the first embodiment. A cleaning liquid may be applied to the coating film before the coating film 3 is removed by the coating film removing member 40F in a coating film removing device 100K described later so that the coating film 3 is easily removed.

### [Coating film Removing Member and Coating film Removing Device]

FIG. 11 includes (A) a front view and (B) a side view of the rotary removing member 40F used in FIG. 10. The rotary removing member 40F includes a main body 45F having a rotation axis R extending in the width direction of the coated film 1, a plurality of edges 41F that come into contact with the surface of the coating film 3 to remove the coating film 3, the plurality of edges 41F arranged in such a manner as to extend in ridge line shapes in the width direction on the circumference of the main body 45F, and discharge portions 44 which are spaces between the plurality of edges 41F. Each of the plurality of edges 41F includes a surface 411 on the upstream side in the film conveyance direction, a circumferential surface 412 in contact with the base film 2 from which the coating film 3 has been removed, and side surfaces between the surface 411 on the upstream side and the circumferential surface 412. The edges 41F and discharge portions 44 are arranged on the circumference of the main body 45F in such a manner as to extend in parallel to the rotation axis R. The rotary removing member 40F is preferably made of metal; however, it is not limited thereto, and the rotary removing member 40F may be made of resin.

The rotary removing member 40F is disposed to face the surface of the coating film of the coated film 1. The rotary removing member 40F has a rotary driving means (not illustrated) and is driven to reversely rotate in a direction opposite to the conveyance direction of the coated film 1. In addition, the placement position of the rotary removing member 40F is not limited to the lower surface side as illustrated in FIG. 10. The unwinding device 10 is more preferably a mechanism capable of switching the unwinding direction of the coated film 1 and conveying with the surface of the coating film of the coated film 1 facing the edge 41 in such a manner that the coating film 3 can be removed regardless of whether the coating film 3 of the coated film 1 wound in a roll is on the inner side or on the outer side of the roll.

An edge 41F is preferably formed in such a manner that an angle formed by the surface 411 on the upstream side in the film conveyance direction among the surfaces forming the edge 41F and the coated film conveyed toward the edge is greater than or equal to 90° and less than 180° as viewed from a side in the conveyance direction of the coated film 1. By setting the angle formed by the surface 411 and the coated film 1 to greater than or equal to 90° and less than 180°, the coating film 3 can be efficiently removed from the coated film 1 without applying high tension to the coated film 1 by the driving devices 30-1 and 30-2. The angle formed by the surface 411 and the coated film conveyed toward the edge is more preferably within a range of 90° to 150°.

The driving devices 30-1 and 30-2 preferably have a structure that enables tension adjustment in order to stably convey the coated film 1 and the base film 2 from which the coating film 3 has been removed. In a case where the tension is adjusted by a suction roll, a part of the coating film of the coated film 1 may be sucked, which may cause a trouble. Therefore, a structure in which the film is nipped by a metallic driving roll and a rubber roll is more suitably used. As the driving devices 30-1 and 30-2, those made of stainless steel or applied with surface treatment as a rust prevention measure are suitably used.

The roller 50 disposed on the downstream side of the rotary removing member 40F is disposed in such a manner as to bring the plurality of edges 41 into contact with the coated film 1. As a result, the removing efficiency of the coating film 3 by the coating film removing member 40F can be improved.

The suction mechanism 70 includes a tank 72 that stores the sucked coating film 3 and a suction device 74 that sucks the removed coating film 3 from the discharge portions. As the suction device, a vacuum pump or the like can be used. The discharge portions 44 and the tank 72 are connected by a pipe 71, and the tank 72 and the suction device 74 are connected by a pipe 73. Since the removing of the coating film 3 from the coated film 1 by the edge 41 F is performed only at a portion where the coated film 1 and the edge 41 F are in contact with each other, the suction mechanism 70 may have a configuration such that the removed coating film 3 is sucked from the discharge portion 44 constituted by the surface 411 on the upstream side in the film conveyance direction of the edge 41 F in contact with the coated film 1.

Note that, in order to check the quality of the base film 2 from which the coating film 3 has been removed by the rotary removing member 40F, the coating film removing device 100F may include an inspection machine (not illustrated), for detecting residues of the coating film 3 or environmental foreign matters attached in a step, as a preceding stage to the winding device 20. The inspection machine may be selected depending on the properties of the base film 2, and an inspection machine using transmitted light or reflected light is suitably used. A marking device (not illustrated) for recording the position of the residues of the coating film detected by the inspection machine or the environmental foreign matter attached in the steps may also be provided between the inspection machine and the winding device 20. The marking method by the marking device may be any method as long as the position of a detection target can be marked, such as a pen, a sticker, or laser. By marking the residues of the coating film or the environmental foreign substances attached in the steps, it is possible to remove those portions before remelting, and thus a regenerated film can be more stably formed, and deterioration in the quality of the regenerated film can be prevented.

In the coating film removing device 100F according to the second embodiment, the coating film 3 is removed from the coated film 1 by the rotary removing member 40F, and the coating film 3 deposited in the discharge portions 44 is sucked by the suction mechanism 70. Therefore, the coating film 3 is not deposited in the rotary removing member 40F even after long hours of use, and the removing performance can be maintained.

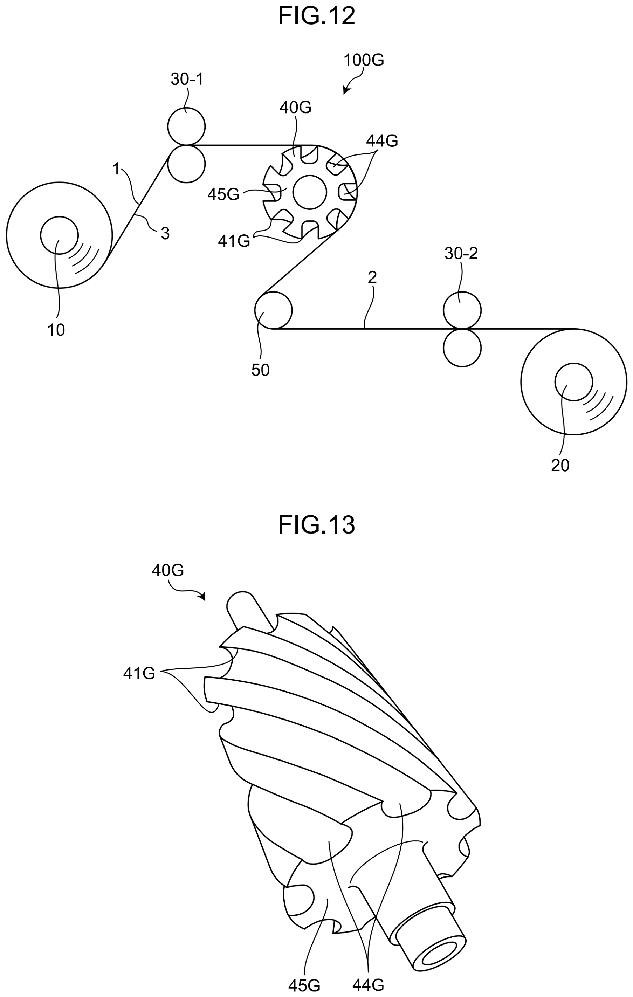

FIG. 12 is a schematic diagram of a coating film removing device 100G according to a first modification of the second embodiment of the present invention, and FIG. 13 is a perspective view of a rotary removing member 40G used in FIG. 12. The coating film removing device 100G is different from the coating film removing device 100F in including the rotary removing member 40G instead of the rotary removing member 40F and not including the suction mechanism 70.

The rotary removing member 40G includes a main body 45G having a rotation axis R extending in the width direction of the coated film 1, a plurality of edges 41G that comes into contact with the surface of the coating film 3 to remove the coating film 3, the plurality of edges 41G arranged in such a manner as to extend in ridge line shapes in the width direction on the circumference of the main body 45G, and discharge portions 44G which are spaces between the plurality of edges 41G. Similarly to the edges 41F, the plurality of edges 41G include a surface on the upstream side in the film conveyance direction, a circumferential surface in contact with the base film 2 from which the coating film 3 has been removed, and side surfaces between the surface on the upstream side and the circumferential surface. The edges 41G and the discharge portion 44G are arranged in such a manner as to extend spirally on the circumference of the main body 45G. The rotary removing member 40G is preferably made of metal; however, it is not limited thereto, and the rotary removing member 40G may be made of any material such as resin or rubber. Furthermore, plating or coating may be applied, which may be selected as appropriate depending on the material of the coated film 1 or the component(s) of the coating film 3.

Similarly to the edges 41F, an edge 41G is preferably formed in such a manner that an angle formed by the surface on the upstream side in the film conveyance direction among the surfaces forming the edge 41G and the coated film conveyed toward the edge is greater than or equal to 90° and less than 180° as viewed from a side in the conveyance direction of the coated film 1, and more preferably, within a range of 90° to 150°. By setting the angle formed by the surface on the upstream side and the coated film 1 to greater than or equal to 90° and less than 180°, the coating film 3 can be efficiently removed from the coated film 1 without applying high tension to the coated film 1 by driving devices 30-1 and 30-2.

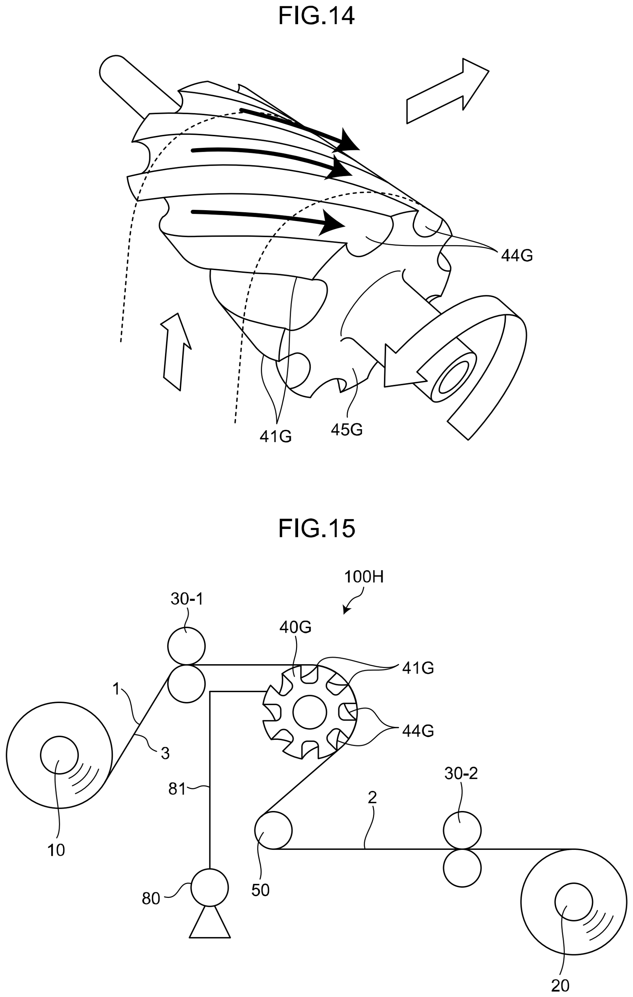

FIG. 14 is a diagram for explaining coating film removing and discharging of the rotary removing member 40G illustrated in FIG. 13. The rotary removing member 40G is driven by a rotary drive means (not illustrated) to reversely rotate in a direction opposite to the conveyance direction of the coated film 1. The coating film 3 removed by contact between the coated film 1 and the edges 41G is deposited in the discharge portions 44G. In the rotary removing member 40G, since the discharge portions 44G are formed in a spiral shape on the circumference of the main body 45G, the coating film 3 deposited in the discharge portions 44G is discharged from the end of the discharge portions 44G on the downstream side in the film conveyance direction as the rotary removing member 40G rotates as indicated by black arrows in FIG. 14.

Alternatively, the edges 41G and the discharge portions 44G may be arranged on the circumference of the main body 45G in such a manner as to extend in a doublehelical shape in which rightward twist and leftward twist are combined with the center in the width direction of the rotary removing member 40G as the boundary. Due to the bilateral symmetry, defects such as meandering are less likely to occur when the coated film 1 is conveyed. In this case, the direction of torsion directed toward the center in the width direction is set in such a manner that the coating film can be discharged to the ends of the rotary removing member 40G when the rotary removing member 40G rotates.

In the coating film removing device 100G according to the first modification of the second embodiment, by using the rotary removing member 40G having the spiral edges 41G and the spiral discharge portions 44G, the coating film can be removed from the rotary removing member 40G without being sucked by the suction mechanism, and the removing performance can be maintained even in long hours of use.

FIG. 15 is a schematic diagram of a coating film removing device 100H according to a second modification of the second embodiment of the present invention. The coating film removing device 100H includes the rotary removing device 40G of the first modification, and an air jetting mechanism 80 is disposed.

The air jetting mechanism 80 ejects air into the discharge portion 44G of the rotary removing device 40G to remove the coating film deposited in the discharge portions 44G. The air jetting mechanism 80 is connected to the discharge portion 44G by a pipe 81. Since the removing of the coating film 3 from the coated film 1 by the edges 41G is performed only at locations where the coated film 1 and the edges 41G are in contact with each other, it suffices to implement a structure in which air is ejected into a discharge portion 44G formed by the surface on the upstream side in the film conveyance direction of an edge 41G that is in contact with the coated film 1.

In the coating film removing device 100H according to the second modification of the second embodiment, since the coating film 3 in the discharge portions 44G of the rotary removing member 40G can be forcibly discharged by air, the coating film can be removed from the rotary removing member 40G, and thus the removing performance can be maintained even in long hours of use.

Note that, instead of the air jetting mechanism 80, the suction mechanism 70 may be connected to the rotary removing member 40G to suck the removed coating film 3. Alternatively, the air jetting mechanism 80 may be connected to the rotary removing member 40F instead of the rotary removing member 40G.

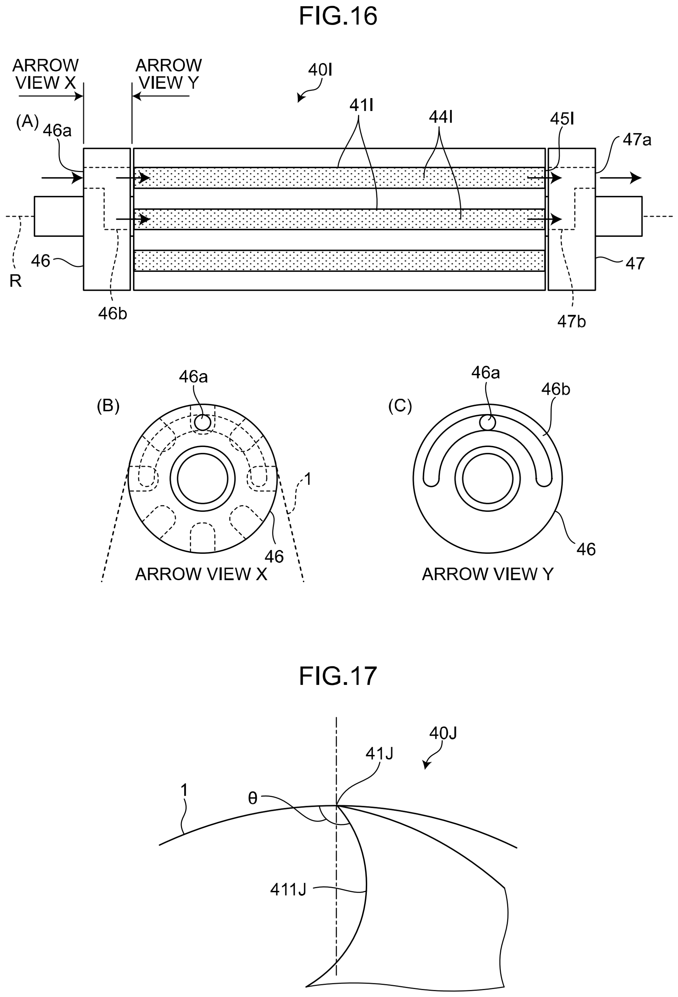

FIG. 16 includes (A) a front view of a rotary removing member 40I according to a third modification of the second embodiment of the present invention, (B) an arrow view X in (A) of FIG. 16, and (C) an arrow view Y in (A) of FIG. 16. The rotary removing member 40I includes a main body 45I having a rotation axis R extending in the width direction of the coated film 1, a plurality of edges 41I that come into contact with the surface of the coating film 3 to remove the coating film 3, the plurality of edges 41I arranged in such a manner as to extend in ridge line shapes in the width direction on the circumference of the main body 45I, discharge portions 44I which are spaces between the plurality of edges 41I, a first connection member 46 attached to a first end of the main body 45I, and a second connection member 47 attached to a second end of the main body 45I. The first connection member 46 and the second connection member 47 are attached to the main body 45I so as not to rotate when the main body 45I is rotated by a rotary driving means. Note that the main body 45I, the edges 41I, and the discharge portions 44I have similar structures to those of the main body 45, the edges 41F, and the discharge portions 44 of the second embodiment.

The first connection member 46 includes a connection portion 46a to which a pipe, connected to an air jetting mechanism, is connected and a groove 46b that supplies air supplied from the air jetting mechanism through the connection portion 46a to discharge portions 44I. In the first connection member 46 illustrated in FIG. 16, the groove 46b supplies air to five discharge portions.

The second connection member 47 includes a connection portion 47a to which a pipe, connected to a suction mechanism, is connected and a groove 47b that collects the coating film discharged from the discharge portions 44I together with the air. The air ejected by the air jetting mechanism is supplied to the discharge portions 44I by the first connection member 46, the coating film discharged together with the air supplied to the discharge portions 44I is collected by the groove 47b of the second connection member 47, and the coating film in the groove 47b is sucked by the suction mechanism via the connection portion 47a.

In the rotary removing device 40I according to the third modification of the second embodiment, air is supplied to the discharge portions 44I, where the coating film is deposited, by the first connection member 46 and the second connection member 47, and the coating film is sucked together with the supplied air, and thus the coating film can be quickly removed from the rotary removing member 40I.

Furthermore, by making the width of the coated film 1 substantially the same as the width of the rotary removing member 40I to cover the discharge portions 44I with the coated film 1, scattering of the removed coating film can be suppressed, and the airtightness of the spaces of the discharge portions 44I is enhanced, whereby the coating film can be removed more quickly. Furthermore, releasability may be improved by applying fluorine coating or silicone coating to the surfaces on which the discharge portions 44I are formed, whereby deposits of the coating film in the discharge portions 44I may be suppressed.

Alternatively, instead of the second connection member 47, the rotary removing member 40I is structured to have a hollow structure continuing to the shaft end, and holes for communicating the hollow portion and the discharge portions 44I are formed. Furthermore, by connecting to the suction mechanism from the shaft end of the rotary removing member 40I via a rotary joint, the coating film in the discharge portions 44I may be sucked through the hollow portion.

Deterioration in the removing performance occurs when the deposited coating film enters between the edges 41I and the coated film 1. Therefore, it is preferable that the amount of the removed coating film present in the vicinity of the edges 41I is small, and more preferably, there is no removed coating film, that is, immediate removal after the removing can prevent deposits of the coating film, which makes it possible to maintain the removing performance even in long-hours of use.

FIG. 17 is a diagram for explaining an angle formed by an edge 41J of a rotary removing member 40J and the coated film 1 according to the fourth modification of the second embodiment of the present invention. In the edge 41J of the rotary removing member 40J, a surface 411J on the upstream side in the film conveyance direction is formed in an arc shape. Also in the rotary removing member 40J, as viewed from a side in the conveyance direction of the coated film, by forming the edge 41J of the rotary removing member 40J in such a manner that an angle θ formed by the surface 411J on the upstream side in the film conveyance direction and the coated film 1 is greater than or equal to 90° and less than 180°, the coating film 3 can be efficiently removed from the coated film 1 without applying high tension. The angle formed by the surface 411J and the coated film 1 is more preferably within the range of 90° to 150°.

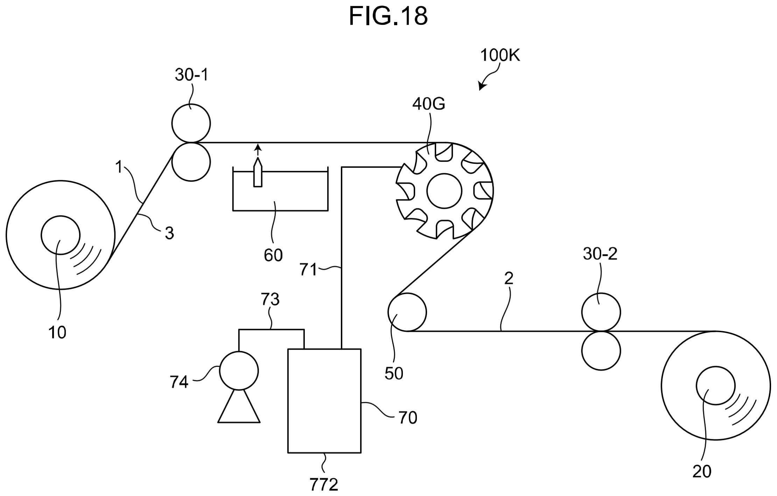

FIG. 18 is a schematic diagram of a coating film removing device 100K according to a fifth modification of the second embodiment of the present invention. The coating film removing device 100K includes a cleaning liquid applying mechanism 60 provided on the upstream side in the film conveyance direction with respect to the removing member 40G. As the cleaning liquid applying mechanism 60, a similar one to the cleaning liquid applying mechanism 60 used in the coating film removing device 100E according to the fifth modification of the first embodiment of the present invention can be used. The coating film removing device 100K is suitably used to facilitate removing of the coating film 3.

As for the amount of the cleaning liquid to be applied to the surface of the coating film of the coated film 1, the type of the cleaning liquid, and the type of a discharge nozzle, similar ones to those of the cleaning liquid applying mechanism 60 used in the coating film removing device 100E according to the fifth modification of the first embodiment of the present invention can be used.

The cleaning liquid applying mechanism 60 is only required to be able to apply the cleaning liquid to the surface of the coating film of the coated film 1 and may have a liquid tank storing the cleaning liquid and apply the cleaning liquid to the surface of the coating film by immersing the coated film 1 in the liquid tank.

In order to dissolve at least some components of the coating film quickly, it is preferable to apply a heated cleaning liquid to the surface of the coating film of the coated film 1. In a case where a discharge head is used, the discharge head may be provided with a heat source such as a cartridge heater, or a tank for storing the cleaning liquid may be heated. In a case where a liquid tank is used, the liquid tank may be heated, or a throw-in heater may be installed inside the liquid tank. Any means may be used as long as the cleaning liquid can be heated, and it is not limited to the above means.

Since the coating film removed as described above contains a component dissolved by the cleaning liquid and thus has high viscosity and poor fluidity, which is likely to cause deposits. However, when the rotary removing member 40F of the present invention is used, the removed coating film is forcibly discharged from the ends of the discharge portions 44G on the downstream side in the film conveyance direction as the rotary removing member 40G rotates, and thus the removing performance can be maintained without deposits even in long hours of use.

In addition, in the coating film removing device 100K, instead of the rotary removing member 40G, the rotary removing member 40I according to the third modification may be used together with the air jetting mechanism and the suction mechanism. Since the coating film is sucked together with the supplied air, the removed coating film is forcibly discharged, and thus the removing performance can be maintained without deposits even in long hours of use.

In addition, the coated film 1 to which the cleaning liquid has been applied may be heated in the coating film removing device 100K. As the heating means, a hot air generator or the like (not illustrated) can be used. By setting the temperature of the coated film 1 to higher than or equal to 40°C by hot air, the cleaning liquid applied to the surface of the coating film quickly dissolves at least some components of the coating film, whereby the coating film can be more efficiently removed. The means for heating the coated film 1 may be any means. For example, the coated film 1 may be brought into direct contact with a heating roll, or the cleaning liquid applying mechanism 60 and the coating film removing mechanism 40G may be surrounded by a booth, and an infrared heater may be installed inside the booth for heating, yet it is not limited thereto. In addition, installing the booth makes it possible to prevent a decrease in the temperature of the heated cleaning liquid and/or the coated film 1, and it is possible to prevent scattering to the surroundings even in a case where the cleaning liquid is applied in the form of droplets. Since the inside of the booth has a high temperature, the booth preferably has heat resistance, and thus metal, glass, or the like is suitably used.

In the coating film removing device 100K, it is more preferable to completely remove the cleaning liquid in order to stably form a film as a regenerated film after remelting the base film 2 obtained after removing the coating film 3 and wound by the winding device 20, and a drying device (not illustrated) may be provided between the rotary removing member 40G and the winding device 20. The drying device only needs to be provided as a preceding stage to winding and may be either preceding or subsequent to the driving device 30-2.

### Reference Signs List

1 COATED FILM
2 BASE FILM
3 COATING FILM
10 UNWINDING DEVICE
20 WINDING DEVICE
30-1, 30-2 DRIVING DEVICE
40, 40-1, 40-2, 40-3, 40', 40A, 40C, 40D COATING FILM REMOVING MEMBER
40F, 40G, 40I, 40J ROTARY REMOVING MEMBER
41, 41', 41A, 41C, 41D, 41F, 41G, 41H EDGE
42, 42A, 42', 42C, 411 SURFACE ON UPSTREAM SIDE
42a' INCLINED SURFACE
42b CONCAVE SURFACE
43, 43A, 43', 43C SURFACE ON DOWNSTREAM SIDE
43, 43a, 43a' GRADIENT
44, 44G, 44I DISCHARGE PORTION
45, 45F, 45G, 45I MAIN BODY
46 FIRST CONNECTION MEMBER
46a, 47a CONNECTION PORTION
46b, 47b GROOVE
47 SECOND CONNECTION MEMBER
50 ROLLER
60 CLEANING LIQUID APPLYING MECHANISM
70 SUCTION MECHANISM
71, 73, 81 PIPE
67 TANK
74 SUCTION DEVICE
80 AIR JETTING MECHANISM
90 CLEANING LIQUID APPLYING MECHANISM
100, 100B, 100C, 100E, 100F, 100G, 100H, 100K COATING FILM REMOVING DEVICE
412 CIRCUMFERENTIAL SURFACE

## Claims

1. A coating film removing device that removes a coating film from a coated film including the coating film on at least one surface of a base film, the coating film removing device comprising:
a conveyance mechanism configured to convey the coated film; and
a coating film removing member having an edge extending in a film width direction, the edge being configured to be in contact with a surface of the coating film of the coated film to remove the coating film,
wherein, as viewed from a side in a conveyance direction of the coated film, an angle formed by a surface on an upstream side in the film conveyance direction among surfaces forming the edge of the coating film removing member and the coated film conveyed toward the edge is greater than or equal to 90° and less than 180°.

2. The coating film removing device according to claim 1, wherein a plurality of coating film removing members are arranged in the film conveyance direction.

3. The coating film removing device according to claim 1,
wherein the coating film removing member includes a cylindrical main body and a plurality of edges arranged on a circumference of the main body in parallel to a central axis of the main body.

4. The coating film removing device according to claim 1,
wherein the coating film removing member includes a cylindrical main body and a plurality of edges arranged spirally on a circumference of the main body.

5. The coating film removing device according to claim 1, further comprising a cleaning liquid applying mechanism provided on the upstream side in the film conveyance direction with respect to the coating film removing member, the cleaning liquid applying mechanism being configured to discharge a cleaning liquid toward the surface of the coating film of the coated film.

6. A coating film removing method for removing a coating film from a coated film including the coating film on at least one surface of a base film using the coating film removing device according to any one of claims 1 to 5, the method comprising:
removing the coating film from the coated film by bringing the edge of the coating film removing member into contact with the surface of the coating film while conveying the coated film by the conveyance mechanism.

7. The coating film removing method according to claim 6, wherein the cleaning liquid is applied to the surface of the coating film, and then the coating film containing the cleaning liquid is removed by the coating film removing member.

8. The coating film removing method according to claim 7, wherein the coating film contains a water-soluble resin.

9. The coating film removing method according to claim 8, wherein the coating film contains a curable silicone.
